(19) **Europäisches Patentamt**
**European Patent Office**
**Office européen des brevets**

(11) **EP 3 144 883 A1**

(12) **EUROPEAN PATENT APPLICATION**

(43) Date of publication:
**22.03.2017 Bulletin 2017/12**

(51) Int Cl.:
*G06T 5/00* (2006.01)
*H04N 1/58* (2006.01)
*H04N 1/32* (2006.01)

(21) Application number: **15306421.7**

(22) Date of filing: **16.09.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Thomson Licensing
92130 Issy-les-Moulineaux (FR)**

(72) Inventors:
• **HELLIER, Pierre**
**35576 Cesson-Sévigné (FR)**
• **LEBRUN, Marc**
**35576 Cesson-Sévigné (FR)**
• **DEMOULIN, Vincent**
**35576 Cesson-Sévigné (FR)**

(74) Representative: **Huchet, Anne
TECHNICOLOR
1-5, rue Jeanne d'Arc
92130 Issy-les-Moulineaux (FR)**

(54) **METHOD AND APPARATUS FOR SHARPENING A VIDEO IMAGE USING AN INDICATION OF BLURRING**

(57) Methods and an apparatus for sharpening a video using an indication of blurring in a video signal are described. A method (300) includes providing (340) the indication of blurring along with the video signal to a signal receiving device, wherein the indication of blurring is provided to improve the sharpness of the video image. Another method includes receiving (710) a video signal including metadata representing an indication of blurring, adjusting (730) the sharpness of the video signal using the indication of the blurring, and providing (740) the adjusted video signal for display on a display device. An apparatus (602) includes a tuner (602) that receives a video signal including metadata representing an indication of blurring in the video signal, a video processor (605) that adjusts the sharpness of the video signal using the indication of the blurring, and a display interface (606) that provides the adjusted video signal for display.

FIG. 3

EP 3 144 883 A1

**Description**

Technical Field

The present disclosure generally relates to a method and apparatus for sharpening video content using an indication of blurring. More specifically, the present disclosure relates to creating and providing a blur metric and/or other blur information as a part of metadata associated with media content in order to adaptively sharpen the video image in the media content.

Description of Background

This section is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

Today, media content, such as movie and television programs, are often delivered to a user through the Internet. The media content may be streamed from a content service provider or content aggregator to a user's device (e.g., a television, settop box, smart phone, tablet, and the like) over wired or wireless networks. The media content may also include visual effects shots or content that requires significant data bandwidth to deliver.

The networks used to deliver the media content may have data bandwidth constraints that limit the delivery capability. The constraints may include inherent technical limits in the network(s) or bandwidth limiting by a service provider or aggregator based on fees paid by the user. The bandwidth constraints create a further problem as a result of the increasing availability of, and user desire for, higher resolution media content. In some instances, it may be useful or necessary to deliver some or all of the media content at a lower resolution that utilizes less data bandwidth in the network(s).

Some resolution lowering techniques may introduce an artifact known as blurring of the video signal. Blurring results in the video image appearing out of focus, having a grainy quality, or lacking sharpness in the edges present in the video content. The blurring may be present in the video image either intentionally or as a byproduct of a resolution change. For example, one type of blurring arises from motion that is not properly characterized or maintained during the application of video compression. A second type of blurring may be intentionally introduced as an artistic effect by creating or modifying all or a portion of an image or object as out of focus. The blurring may or may not be perceptible on all user devices.

To reduce the effect of blurring in a video image, video processing to sharpen the image may be performed. The image sharpening is typically performed in a receiving device prior to display to the user. Image sharpening enhances the edges present in video content. However, the image sharpening is usually performed with little information regarding the source or reason for the blurring of the video image originally. As a result, it is possible for the image sharpening in a receiving device to introduce its own set of undesirable video artifacts including, but not limited to, noise enhancement, temporal artifacts, or spatial artifacts in the video image. Therefore, there is a need for an improved characterization of the blur, referred to as a blur metric. Further, there is a need to provide the blur characterization, or blur metric, with the delivered media content in order to allow the user device to process the media content and improve the user experience with the media content.

Summary

According to an embodiment of the present disclosure, a method is disclosed. The method includes providing an indication of blurring along with the video signal to a signal receiving device, wherein the indication of blurring is provided to improve the sharpness of the video image.

According to another embodiment of the present disclosure, an apparatus is disclosed. The apparatus includes a network interface that provides an indication of blurring along with the video signal to a signal receiving device, the indication of blurring provided to improve the sharpness of the video image.

According to a further embodiment, another method is described. The method includes receiving a video signal, the video signal including metadata representing an indication of blurring in the video signal, adjusting the sharpness of the video signal using the indication of the blurring recovered from the metadata, and providing the adjusted video signal for display on a display device.

According to yet another embodiment, an apparatus is described. The apparatus includes a tuner that receives a video signal, the video signal including metadata representing an indication of blurring in the video signal, a video processor that adjusts the sharpness of the video signal using the indication of the blurring recovered from the metadata, and a display interface that provides the adjusted video signal for display on a display device.

The above presents a simplified summary of the subject matter in order to provide a basic understanding of some aspects of subject matter embodiments. This summary is not an extensive overview of the subject matter. It is not intended to identify key/critical elements of the embodiments or to delineate the scope of the subject matter. Its sole purpose is to present some concepts of the subject matter in a simplified form as a prelude to the more detailed description that is presented later.

Brief Summary of the Drawings

These and other aspects, features, and advantages of the present disclosure will be described or become apparent from the following detailed description of the preferred embodiments, which is to be read in connection with the accompanying drawings.

FIG. 1 is a block diagram of a system for providing media content to users in accordance with the present disclosure;

FIG. 2 is a block diagram of an electronic device for processing media content in accordance with the present disclosure;

FIG. 3 is a flowchart of a process for in accordance with the present disclosure;

FIG. 4 is a graph showing blur metric values over a range of Gaussian blur for a series of images in accordance with the present disclosure;

FIG. 5 is another graph showing blur metric values over a range of Gaussian blur for a series of images in accordance with the present disclosure;

FIG. 6 is a block diagram of a user device for receiving media content in accordance with the present disclosure;

FIG. 7 is a flowchart of a process for receiving and processing metadata associated with media content in accordance with the present disclosure; and

FIG. 8 is a flowchart of a process for sharpening the image in a video display signal using an indication of blurring in accordance with the present disclosure.

It should be understood that the drawing(s) are for purposes of illustrating the concepts of the disclosure and are not necessarily the only possible configuration for illustrating the disclosure.

Detailed Description

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

The present disclosure addresses issues related to enhancing the viewing experience of media content delivered or streamed to a user device over a network. The media content may not be able to be delivered at a quality level that is the same as the original content due to limitations, such as data bandwidth, in the delivery of the media content over the network. As a result, the media content may be processed prior to delivery or streaming in order to convert the media content for delivery over a data bandwidth limited network.

One or more of the processing functions used for delivering or streaming the media content may introduce blurriness into the video portion of the media content which may degrade the viewing experience of the user. The user may desire to improve the quality of the display video image by sharpening the video image. However, user initiated or other static image sharpening processes may not significantly improve or may actually degrade the viewing experience. For instance, sharpening of low or medium quality videos, such as user generated content or content that requires a high level of video compression prior to delivery may over-amplify the high frequencies to improve the display of the video image. The over-amplification may lead to artifacts including, but not limited to, noise enhancement, temporal artifacts, and spatial image displacement artifacts. Higher quality content, such as professional movies that are delivered with a lower level of video compression, may include blurred images corresponding to an artistic intent that needs to be preserved. In these cases, sharpening of the video image is likely not desirable.

The present disclosure describes an apparatus and method for sharpening video content using an indication of blurring. The apparatus and method may include receiving and processing a video signal to determine an indication of the blurring in the video signal. The blur indication may be determined in a number of ways. In one embodiment, the blur indication includes a blur metric that is determined using a gradient value on each side of each of the pixels in the first video image and the second video signal. The gradient values are further processed to determine a blur metric for a range of amounts of blurring. The blur metric may be further normalized to be monotonic in a range from zero to one for the range of amounts of blurring. Additionally, the apparatus and method may include determining extremal values of blur for a series of video images in the video signal and providing these values along with, or instead of, a blur metric. In general, extremal values of blur are the smallest (minimum) or largest (maximum) values for a blur measurement or metric. The extremal values may be determined for an area around a single point in the image, referred to as a relative or local extremal value, or over the entire image. The series of images may make up what is referred to as a shot for the portion of the video signal. The blur metric and/or extremal values (i.e., maximum and minimum levels) may further allow adaptive sharpening of the video image over the video image frames in the shot. The blur indication is provided as metadata with the media content signal and may be streamed, or otherwise delivered, to users for processing and display.

The present disclosure also describes an apparatus and method for receiving and processing media content that includes an indication of blurring in the video signal in order to adaptively sharpen the video image for display. One or more embodiments describe receiving and using an indication of blurring included as part of metadata for media content in order to process a video image or video signal that is part of the media content. The indication of blurring may include a blur metric for the video signal and/or extremal values for blurring present in the video signal. The indication of blurring is used in conjunction with a video sharpening circuit to improve the display of the video signal. The blur metric and/or the extremal values for blurring are used to adjust the processing of the high frequency portion of the video signal in order to sharpen the image for the video signal. The indication of blurring may also be used to provide an indication to a user that some or all of the media content provided and displayed is blurry.

Although the present disclosure describes one or more specific embodiments for generating, providing, and using blur indication information, or a blur metric, associated with a media content file (e.g., movie or television show) as it relates to media content conversion for network download or streaming over a network, the principles may be applicable to other media content conversion and delivery mechanisms. For example, with some modifications, similar principles may be applied to disk replication techniques. Further, with some modifications, similar principles may be applied to media content creation and/or processing done by a user using home devices (e.g., a computer and portable camera). Still further, the blur indication information may be used as part of additional video processing along with image sharpening in a receiving device to enhance the displayed video image, such as dynamic range enhancement processing. Such modifications are considered within the ability of one skilled in the art.

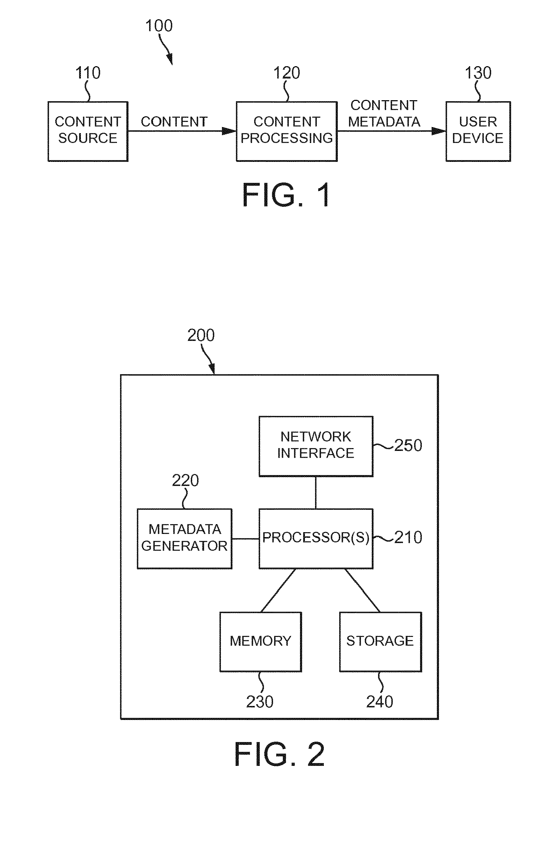

Turning now to FIG. 1, a block diagram of an embodiment of a system 100 for implementing media content delivery is shown. As such the system 100 includes a content source 110, content processing block 120, and a user device 130 coupled together. Each of these will be discussed in more detail below.

The content source 110 may be a server or other storage device, such as a hard drive, flash storage, magnetic tape, optical disc, or the like. The content source 110 may be located at a facility used by a content owner, a facility used by a content provider, or a facility used by a content aggregator. The content source 110 provides media content (e.g., audio and video) to content processing block 120. The media content may include content at more than one video resolution and/or video format. The media content may also include special content, such as visual effects (VFX) shots. The content may be in any number of formats and resolutions. In one embodiment, some or all of the media content is provided in ultra high definition (UHD) resolution and format, also known as 4K resolution using high dynamic range (HDR) contrast. Other formats and resolutions, including different combinations within the same media content are possible as are well known to those skilled in the art.

The content processing block 120 may be co-located with the content source 110 or may be located at a different facility (e.g., content source 110 at content owner facility and content processing block 120 at content aggregator facility). The content processing block 120 analyzes the media content from content source 110 to determine how to best optimize the conversion, reformatting, or scaling of the media content. The optimization, along with any processing, may be performed automatically within central processing block 120 with external inputs from an operator. The optimization may also be performed manually by an operator providing direct inputs for the various processing functions. The content processing block 120 may also encode, re-encode, or transcode some or all of the media content. The encoding, re-encoding, or transcoding may change the format or resolution of the media content in order to facilitate delivery over a network and reception by user device 130.

The content processing block 120 also provides metadata to accompany the media content. Some of the metadata may be provided along with the media content from the content source 110. Other metadata may be generated, or the provided metadata may be modified, based on the analysis of the original media content. The metadata may also be generated or modified based on the various processing functions (e.g., encoding, upscaling, conversion, re-formatting) performed in content processing block 120.

Examples of metadata fields for video processing may include:

Metadata - Luminance
Metadata - Chrominance
Metadata - Block Size
Metadata - Bit Depth
Metadata - Motion Vectors
Metadata - Noise Reduction Parameters
Metadata - Motion Estimation
Metadata - Quantization Levels
Metadata - Blur Metric
Metadata - Extremal Blur Values
Metadata - Color Information for High Dynamic Range
Metadata - Other

The user device 130 is typically interfaced to the content processing block 120 through one or more networks including, but not limited to, the Internet, a wide area network (WAN), and a broadcast medium (e.g., terrestrial, cable, satellite). The use device 130 typically includes circuitry for receiving and processing the media content and metadata received from the content processing block 120. The user device 130 also may include the processing circuitry for rendering or displaying the video portion of the media content at a desired resolution.

The user device 130 also receives and processes the metadata along with the media content. The user device 130 may use the metadata to optimize or improve the rendering or display of the media content. In certain embodiments, the metadata may be used to upscale visual effects or other portions of the media content from a lower resolution to a higher resolution. The user device 130 may be, but is not limited to, a gateway device, a television, a desktop computer, a laptop computer, a game console, a settop box, a smart phone, an augmented reality device, a virtual reality device, and a tablet.

In one embodiment, the metadata includes an indication of blurring, such as a global blur metric value and/or extremal blurring level values, as a result of video signal processing of the media content. The video data may have been either intentionally blurred or may become blurred due to, or as an artifact of, processing in processing block 120. The blur indication information may be used in conjunction with other metadata in a processing circuit in user device 130 to adaptively sharpen the video content prior to display to the user. The blur metric value and information may further be used to provide an indication of blurring in order to determine if sharpening the video content is necessary or desirable. The generation of blur indication information as well as the use of the blur indication information to sharpen the video content for display will be described in further detail below.

Turning to FIG. 2, a block diagram of an electronic device 200 used for processing media content in accordance with the present disclosure is shown. The electronic device 200 includes one or more processors 210 coupled to metadata generator 220, memory 230, storage 240, and network interface 250. Each of these elements will be discussed in more detail below. Electronic device 200 may operate in a manner similar to content processing block 120 described in FIG. 1. Additionally, certain elements necessary for complete operation of electronic device 200 will not be described here in order to remain concise as those elements are well known to those skilled in the art.

The media content is received in electronic device 200 from a content source (e.g., content source 110 described in FIG. 1) and provided to processor(s) 210. The processor(s) 210 controls the operation of the electronic device 200. The processor(s) 210 runs the software that operates electronic device 200 and further provides the functionality associated with video optimization for the video portion of the media content such as, but not limited to, encoding, reformatting, converting and scaling. The processor(s) 210 also handles the transfer and processing of information between metadata generator 220, memory 230, storage 240, and network interface 250. The processor(s) 210 may be one or more general purpose processors, such as microprocessors, that operate using software stored in memory 230. Processor(s) 210 may alternatively or additionally include one or more dedicated signal processors that include a specific functionality (e.g., encoding, reformatting, converting, or scaling).

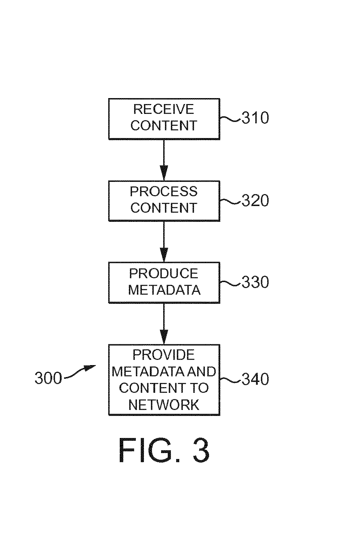

Metadata generator 220 creates parameters and informational data associated with the media content based on the originally received media content and/or the processed media content in processor(s) 210. The metadata may be generated based on the results of the analysis and optimization performed as part of the processing of the media content in processor(s) 210. The metadata may include instructions that will be provided to a user device (e.g., user device 130 described in FIG. 3) as to how to best optimize rendering or display of the visual content. For example, the metadata may include code or hardware specific instructions for an upscaler and/or decoder in the user device. In certain embodiments the metadata may be time synchronized to the particular scene that was analyzed in the scene analysis process.

The metadata generator 220 may also perform a verification of the metadata to determine whether the metadata achieves the desired result or otherwise does not adversely affect the desired optimization as part of rendering or display of the media content. The verification may be performed by using the metadata for the desired optimization and reviewing the result as part of a display. The parameters and/or metadata may be further adjusted as necessary.

The memory 230 stores software instructions and data to be executed by processor(s) 210. Memory 230 may also store temporary intermediate data and results as part of the processing of the media content, either by processor(s) 210 or metadata generator 220. The memory 230 may be implemented using volatile memory (e.g., static RAM), non-volatile memory (e.g., electronically erasable programmable ROM), or other suitable media.

Storage 240 stores the data used and produced by the processor in executing the analysis and optimization of the media content for a longer period of time. In some cases, the resulting converted media content may be stored for later use, for instance, as part of a later request by a different user. Storage 240 may include, but is not limited to magnetic media (e.g., a hard drive), optical media (e.g., a compact disk (CD)/digital versatile disk (DVD)), or electronic flash memory based storage.

The network interface 250 provides a communication interface for electronic device 200 to provide the converted media content and associated metadata to other devices (e.g., user device 130 described in FIG. 1) over a wired or wireless network. Examples of suitable networks include broadcast networks, Ethernet networks, Wi-Fi enabled networks, cellular networks, and the like. It is important to note that more than one network may be used to deliver content to the other devices. For example, the media content and associated metadata may first be packaged for delivery over a cable network controlled by a service provider before terminating into one of the other suitable networks listed above.

In operation, the metadata generator 220 processes the video signal from the media content to produce an indication of blurring for the video. The indication of blurring, in conjunction with other metadata, may be provided to and used by a processing circuit in a user device (e.g., user device 130 described in FIG.1) to process the received video signal. In one embodiment, a global metric for blur may be generated in metadata generator 220. The global metric for blur may be used to sharpen the received video signal for display to a user. Sharpening the video signal typically removes or mitigates the blurriness present in the video signal. Sharpening the video may also improve the apparent focus in the video content and may also improve the definition of edges in the video content. The global metric for blur may also be used to enhance the rendering or display of the video portion of the media content. In another embodiment, extremal (e.g., minimum and maximum) values of the blur metric may be computed for a section or shot in the video content. A section or shot may include a group of visually-consistent and semantically-coherent frames in the video signal. It is important to note that in some embodiments the global metric for blur and extremal values may both be computed and provided to the user device. The generation of a blur metric value and additional blur information will be described in further detail below.

It should be understood that the elements set forth in FIG. 2 are illustrative. The electronic device 200 can include any number of elements and certain elements can provide part or all of the functionality of other elements. Other possible implementations will be apparent to one skilled in the art given the benefit of the present disclosure.

Turning now to FIG. 3 an exemplary flow chart of a process 300 for generating and providing metadata with media content in accordance with the present disclosure is shown. Process 300 may be implemented as part of content processing block 120 described in FIG. 1. Process 300 may also be implemented in a processing device such as electronic device 200 described in FIG. 2. Process 300 involves receiving media content, processing the media content, producing metadata associated with the media content, and providing the metadata related to the media content along with the processed media content to a network for use in a user device (e.g., user device 130 described in FIG. 1).

At step 310, the media content is received from a content source, (e.g., content source 110 described in FIG. 1). The media content may include both an audio portion and a video portion and may further include metadata associated with the audio and/or video portion. The media content may be in any number of formats and resolutions. In one example, the content includes a visual effect in a first resolution that is different from the video resolution for the remaining media content. Examples of visual effects include, but are not limited to, matte paintings, live action effects (such as green screening), digital animation, computer enhanced graphics, and digital effects. In certain embodiments, the visual effect may be provided in standard definition (SD) resolution (e.g., 480i, 480P) or high definition (HD)resolution (e.g., 720p, 1080i, 1080p) while the remaining media content may be provided in UHD.

Next, at step 320, media content is processed. The processing, at step 320, may include determining the initial resolution and format for the media content, determining the desired output resolution and format for the media content to be delivered to the user device, and performing the necessary conversion of the received media content. The processing, at step 320 may also include analyzing the video portion of the media content to determine the one or more video resolutions contained in the video (e.g., visual effects may be in a first resolution). The analysis is used to determine how to best optimize the rendering or display of the content. The analysis may be done on a scene-by-scene or shot-by-shot basis that includes providing a time code based mapping of image optimization requirements. The analysis may initially be performed on the media content received from the content source with a second analysis performed on the converted media content to produce final results. The analysis may also be performed only on the converted media content.

Parameters used as part of analysis and optimization include, but are not limited to, high frequency content, spectral noise content, dynamic range, the amount of focus in the scene or lack of focus in the scene, amount of motion, color, brightness, shadowing, bit depth, block size, and quantization level. In certain embodiments, the parameters may take into account the rendering abilities and limitations of display rendering hardware (e.g., the display on a user device).

Also, at step 320, further processing may be performed on the media content to determine how to best optimize the visual effects content using such parameters. In some embodiments the optimization may include how to best upscale the video effects content from a lower resolution to a higher resolution. In still other embodiments, this optimization may involve the encoding of the visual effects content or otherwise changing the format or resolution of portions of the media content for delivery as a signal over a network.

Certain visual conditions present in the media content may require an adjustment to various settings for noise, chroma and scaling to avoid artifacts and maximize the quality of the viewing experience. The optimizations can also account for the abilities or limitations of the hardware being used for the processing of the received media content in a user device. For example, some scenes may have a higher concentration of visual effects, animated shots may transition into a very detailed image, or portions of the video signal may have a very high contrast ratio. The variance in scenes require different encoding that may introduce blurring, either intentionally or as an artifact, in order to reduce bandwidth of the delivered signal.

Next, at step 330, the results of the analysis and optimization performed as part of the processing of the media content, at step 320, are used to produce metadata. The metadata may include instructions for the rendering device 130 to best optimize rendering or display of the visual content. For example, the metadata may include code or hardware specific instructions for an upscaler and/or decoder of a user device (e.g., use device 130 described in FIG. 1). In certain embodiments the metadata may be time synchronized to the particular scene that was analyzed in the scene analysis process.

Examples of metadata instructions include generic parameters such as sharpness, contrast, or noise reduction.

The metadata may also include specific instructions for different types of devices or hardware. In one embodiment, the metadata includes a blur metric for some or all of processed media content file.

Also, at step 330, the metadata may be verified to determine that metadata achieves the desired result or otherwise does not adversely affect the desired optimization as part of rendering or display of the media content. The verification may be performed by using the metadata for the desired optimization and reviewing the result. The parameters and/or metadata may be further adjusted as necessary.

As part of the metadata generation, at step 330, a master or reference file may be created for each piece of content. In an embodiment, the file includes two elements:

1) Stage 1: Scene by scene and/or frame by frame analysis of factors that would affect image quality is made. The analysis may include automated as well as human quality observation of the before and after comparison, and technical description of factors that would affect image quality. By defining these factors, it is viable for an automated metadata authoring system to provide analysis of conditions that are capable of being tagged for insertion as metadata.

2) Stage 2: The metadata is encoded into an instruction set for the processing circuitry in a specific user device to adjust the settings in the user device. The specific instruction sets allows optimization of the viewing experience and minimization of the occurrence of artifacts, including blurring, that are displayed on the screen of the specific user device.

Next at step 340, once the metadata is produced and, if necessary, verified, in step 330, the metadata along with the converted media content is provided for delivery to a user device over a network.

As described above, the generation of a blur metric may be based on the analysis of processed media content. The blur metric may be specifically computed using the luminance information in the video signal portion of the media content. A specific implementation for a blur metric having properties that are beneficial for use in some situations, such as for use in metadata provided with media content, is described below.

An image $u$ from the media content is analyzed and an integral image of $u$ is computed. The integral image $u$ is computed to increase the speed of the blur step. The implementation determines a separate blur metric for the horizontal direction and vertical direction, denoted as $B_h$ and $B_v$. The final measure is given by the following:

$$B = \max(B_h, B_v). \qquad \text{(equation 1)}$$

For the sake of conciseness, only the computation of $B_h$ will be described as the computation of $B_v$ is the same procedure in a vertical instead of horizontal direction.

With the original input image denoted as $u$, processing (e.g., in processing block 120 described in FIG. 1 or in processor(s) 210 described in FIG. 2) produces a blurred image in the chosen direction. The blurry image is denoted as $\tilde{u}$ and denoted by the following equation:

$$\forall (i,j), \tilde{u}(i,j) = \frac{1}{2\kappa + 1} \sum_{k=-\kappa}^{\kappa} u(i, j+k). \qquad \text{(equation 2)}$$

The gradient, denoted as D$u$, is computed for both the original image $u$ and the blurry image $\tilde{u}$ in the chosen direction as:

$$\forall (i,j), Du(i,j) = |u(i,j+1) - u(i,j-1)|, \qquad \text{(equation 3)}$$

and

$$\forall(i,j),\, D\tilde{u}(i,j) = |\tilde{u}(i,j+1) - \tilde{u}(i,j-1)|.$$

(equation 4)

The sum of the gradients of the image, denoted as $Su$, is computed and the sum of the variance of the gradients, denoted as $Sv$, is computed. It is important to note that the variance is evaluated only when the absolute differences between the gradient of the original image and the gradient of the blurry image are greater than zero. The condition may be denoted by the following:

$$v(i,j) = \begin{cases} Du(i,j) - D\tilde{u}(i,j) & \text{if} \quad Du(i,j) - D\tilde{u}(i,j) > 0 \\ 0 & \text{otherwise} \end{cases}$$

(equation 5)

As a result, $Su$ and $Sv$ may be represented by the following:

$$Su = \sum_{i,j} Du(i,j) \qquad Sv = \sum_{i,j} v(i,j).$$

(equation 6)

Finally, the result is normalized between [0, 1] to obtain the following:

$$\mathcal{B}_h = \begin{cases} \dfrac{Su - Sv}{Su} & \text{if} \quad Su > 0 \\ 1 & \text{otherwise} \end{cases}$$

(equation 7)

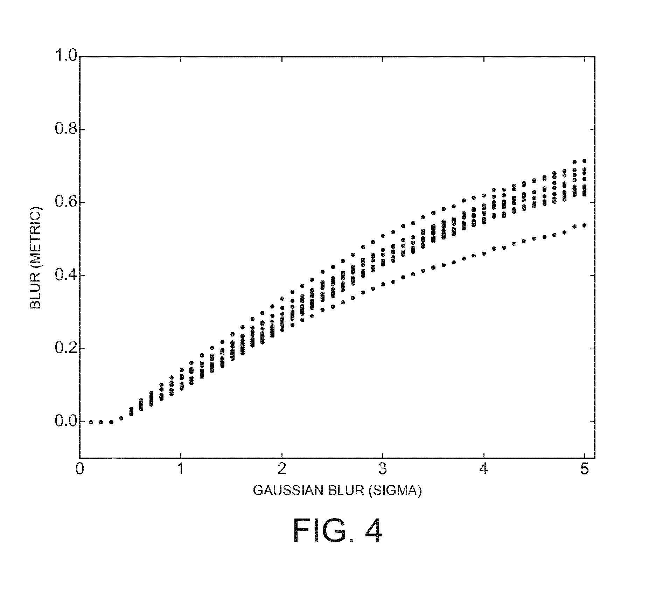

A representative blur metric $B_h$ over a plurality of images covering a range of gaussian blur in each image is shown in FIG. 4. While the blur metric value shown in equation 7 provides an acceptable indication of blurring in an image, influences from a number of parameters associated with the image as well as the content of the image itself limit or restrict the effectiveness of this blur metric. Further improvement in blur may be achieved by modification of the computation, limiting range of computation, and in further linearizing the metric values for the range of Gaussian blur.

The computation of the blur metric may alternatively be determined by simplifying the computation of the gradient for the blurred image as described in the following sets of equations:

$$D\tilde{u}(i,j) \quad = \quad |\tilde{u}(i,j+1) - \tilde{u}(i,j-1)|$$

(equation 8)

$$= \quad \frac{1}{2\kappa+1}|\sum_{k=-\kappa}^{k=\kappa} u(i,j+1+k) - \sum_{k=-\kappa}^{k=\kappa} u(i,j-1+k)|$$

(equation 9)

$$= \quad \frac{1}{2\kappa+1}|\sum_{k=-\kappa+1}^{k=\kappa+1} u(i,j+k) - \sum_{k=-\kappa-1}^{k=\kappa-1} u(i,j+k)|$$

(equation 10)

$$= \quad \frac{1}{2\kappa+1}|u(i,j+\kappa+1) + u(i,j+\kappa) - u(i,j-\kappa) - u(i,j-\kappa-1)|$$

(equation 11)

The determination of the blur metric may alternatively be realized by computing the sum of the gradient of image and variation of the gradients and taking into account only the pixels for which the gradient of the original image is greater than the gradient of the blurred image resulting in the following:

$$Su = \sum_{i,j \text{ such that } Du(i,j)>D\tilde{u}(i,j)} Du(i,j) \qquad Sv = \sum_{i,j \text{ such that } Du(i,j)>D\tilde{u}(i,j)} v(i,j).$$

(equation 12)

The computation of the blur metric may include linearization of the blur metric over the range of [0,1] in order to have better surjectivity (i.e., that the interval of confidence to identify the amount of blurriness from the blur metric is better). The blur metric may be linearized by adjusting the curve to be more linear and monotonic over a wider range of the interval [0,1] for a range of Gaussian blur. In order to achieve this, a polynomial function P is applied to the computed blur metric $B$ (e.g., the combination of $B_h$ and $B_V$).

For example, one possible polynomial P is found from the minimization of the following:

$$\min_{a,b,c,d,e} \left( \sum_n (ay_n^4 + by_n^3 + cy_n^2 + dy_n + e - x_n) \right)^2.$$

(equation 13)

The resulting polynomial is shown as the following:

$$\begin{pmatrix} \sum_n y_n^8 & \sum_n y_n^7 & \sum_n y_n^6 & \sum_n y_n^5 & \sum_n y_n^4 \\ \sum_n y_n^7 & \sum_n y_n^6 & \sum_n y_n^5 & \sum_n y_n^4 & \sum_n y_n^3 \\ \sum_n y_n^6 & \sum_n y_n^5 & \sum_n y_n^4 & \sum_n y_n^3 & \sum_n y_n^2 \\ \sum_n y_n^5 & \sum_n y_n^4 & \sum_n y_n^3 & \sum_n y_n^2 & \sum_n y_n \\ \sum_n y_n^4 & \sum_n y_n^3 & \sum_n y_n^2 & \sum_n y_n & \sum_n 1 \end{pmatrix} \begin{pmatrix} a \\ b \\ c \\ d \\ e \end{pmatrix} = \begin{pmatrix} \sum_n x_n y_n^4 \\ \sum_n x_n y_n^3 \\ \sum_n x_n y_n^2 \\ \sum_n x_n y_n \\ \sum_n x_n \end{pmatrix}$$

(equation 14)

The polynomial P may be determined experimentally, or otherwise learned by processing a set of different images and different values of blur. The coefficients for polynomial P may be fixed for the computation based on the determination. An exemplary set of coefficients is shown below:

a = -18.6948447
b = 34.97138362
c = -18.30364716
d = 10.22577058
e = -0.09037105

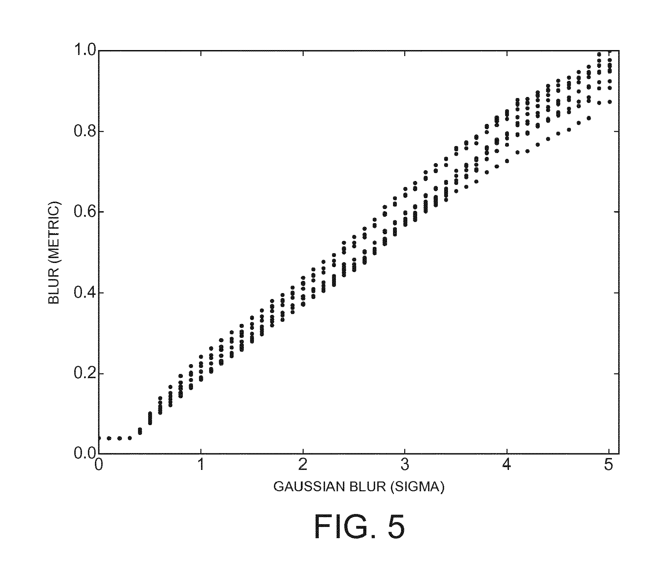

An exemplary final blur metric, after applying the polynomial P to the improved blur metric, for a series of images in media content over a range of Gaussian blur, is shown in FIG. 5.

As a result, a global metric for blur, as described earlier, may be determined or otherwise determined by first obtaining the blur measure $B$ as described in above (e.g., equation 7). An offset value equal to $2/(2\kappa+1)$ is subtracted from the blur measure $B$ in order to obtain a minimal value that is close to zero (0) for perfectly sharp images, where $\kappa$ is related to a property of the video processing filter. The shifted value for the blur measure $B$ is linearized by applying a polynomial function to the shifted value for the blur measure $B$ in order to get a maximal value close to one (1) for highly blurred images (e.g., Gaussian blur > 5).

As described earlier the computed global metric for blur may be provided to a user device (e.g., user device 130 described in FIG. 1) in order to improve the sharpness of the delivered video signal. In some embodiments, the minimum and maximum values of the blur metric may also be computed for portions of the video signal. It is important to note that, in some embodiments, the minimum and maximum values for blur may be determined in the user device after receiving the media content with the metadata including the global metric for blur.

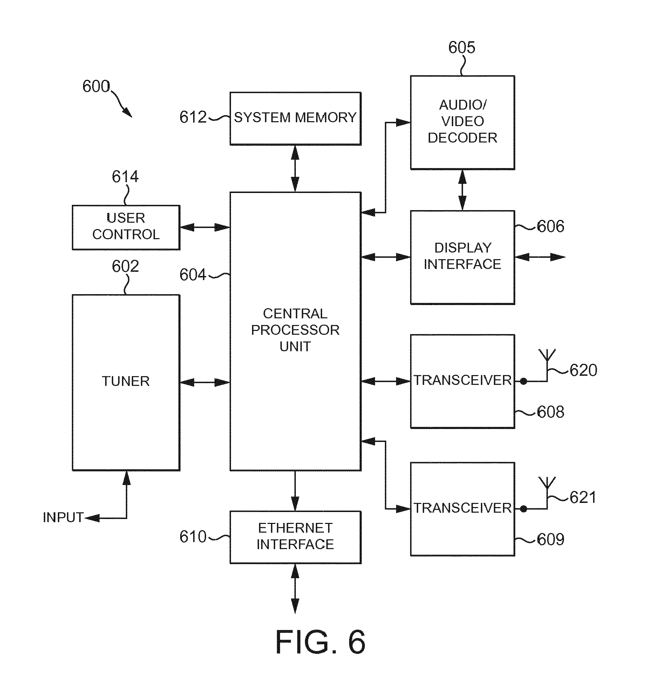

Turning to FIG. 6, a block diagram of an exemplary user device 600 according to aspects of the present disclosure is shown. User device 600 may operate in a manner similar to user device 130 described in FIG. 1. User device 600 may also be configured as a home gateway device capable of receiving a signal including media content and metadata over a wired or wireless network and capable of providing a video output signal for display. Specifically, user device 600 receives an input signal from a cable or digital subscriber line (DSL) network. It is important to note that other embodiments similar to user device 600 are also possible using aspects of the present disclosure described here including, but not limited to, a television, a desktop computer, a laptop computer, a game console, a settop box, a smart phone, an augmented reality device, a virtual reality device, and a tablet.

In user device 600, an input signal containing media content that has been processed for streaming delivery along with metadata is provided as an input to tuner 602. Tuner 602 connects to central processor unit 604. Central processor unit 604 connects to audio/video decoder 605, display interface 606, transceiver 608, transceiver 609, Ethernet interface 610, system memory 612, and user control 614. Audio/video decoder 605 further connects to display interface 606. Transceiver 608 further connects to antenna 620. Transceiver 609 further connects to antenna 621. It is important to note that several components and interconnections necessary for complete operation of user device 600 are not shown in the interest of conciseness, as the components not shown are well known to those skilled in the art. User device 600 may be capable of operating as an interface to a cable or DSL communication network and further may be capable of providing an interface to one or more devices connected through either a wired and wireless home network.

Tuner 602 performs RF modulation functions on a signal provided to the network and demodulation functions on a signal received from the network. The RF modulation and demodulation functions are the same as those commonly used in communication systems, such as cable or DSL systems. Tuner 602 provides the demodulated signal to central processor unit 604. Central processing unit 604 digitally processes the signal to recover the media content and metadata. Central processing unit 604 also includes circuitry for processing the metadata along the with media content in order to provide an improved viewing experience for the video signal in the media content. Similarly, central processor unit 604 also processes and directs any data received from any of the interfaces in gateway 600 for delivery to tuner 602 and transmission to the network.

In one embodiment, the metadata may include an indication of blurring for the media content. The blur indication may include a blur metric, such as the global metric for blur described earlier. The blur metric may be a characterization of a specific portion of the media content (e.g., a frame of video, a block of pictures, a scene segment, or a special effects portion) or may be a time synchronized characterization of the entire media content program. In another embodiment, the blur indication may include extremal values (e.g., minimum and maximum values) for the blurring of the signal or for the blur metric.

Audio/video decoder 605 processes the video portion of the demodulated signal. The processing may include transport layer processing as well as video decoding using one or more video decoding standard, such as Motion Picture Entertainment Group (MPEG) standard MPEG-2 coding, Advance Video Coding (AVC), or High Efficiency Video Coding (HEVC). Audio/video decoder 605 may also process the decoded video for use with a video display through display interface 606. Audio/video decoder 605 may further process the audio portion of the demodulated signal using any one of a number of audio decoding standards and provide the audio signal to an audio interface, not shown.

System memory 612 supports the processing and control functions in central processor unit 604 and also serves as storage for program and data information. Processed and/or stored digital data from central processor unit 604 is available for transfer to and from Ethernet interface 610. Ethernet interface may support a typical Registered Jack (RJ) type RJ-45 physical interface connector or other standard interface connector and allow connection to an external local computer. Processed and/or stored digital data from central processor unit 604 along with video signals from video decoder 605 are also available for display through display interface 606. Display interface 606 provides an interface to a display unit, such as a monitor or television. In some embodiments, the display unit may be included in user device 600 as part of display interface 606. Processed and/or stored digital data from central processor unit 604 is additionally available for exchange with transceiver 608 and transceiver 609. Transceiver 608 and transceiver 609 can both support multiple operations and networked devices simultaneously. Central processor unit 604 is also operative to receive and process user input signals provided via a user control interface 614, which may include a display and/or a user input device such as a hand-held remote control and/or other type of user input device.

In operation, media content, along with metadata that is associated with the media content is received from a network, processed through tuner 602 and provided to central processor unit 604. Metadata, including the indication of blurring, is extracted in central processor unit 604 and provided to audio/video decoder 605 along with the video stream portion of the media content. The blur indication is used during the processing of the video portion of the media content in video decoder 605 in order to sharpen the video image based on the desired display performance or display capabilities.

In one embodiment, three metadata elements for the blur indication (e.g., two extremal values of blur over the shot or a series of frames, as well as current blur metric value) are used for adaptive sharpening of the video content. In video decoder 605, an input image I, is separated into high-frequency component $I_h$ and a low frequency component $I_l$, which is equal to $I - I_h$. The separation may be performed using many different types of filters including, but not limited to, an iterated median filter, edge preserving filters, bilateral filter, and a rolling guidance filter.

The separation is adaptively adjusted or tuned according to a ratio of the blur metric and the extremal values, referred to as the blur ratio, and given by the following equation:

$$\text{Blur ratio} = (B_t - B_{min})/(B_{max} - B_{MIN}) \qquad \text{(equation 15)}$$

Where $B_t$ is blur metric

$B_{min}$ is minimum value for blur metric
$B_{max}$ is maximum value for blur metric

The blur ratio is applied to one or more coefficients or to a kernel size in the separation filter. For example, the blur ratio may be used to adapt the kernel size of an iterated median filter or a bilateral filter. The function that maps the blur ratio to the kernel size may be a continuous strictly increasing function and may also be a simple linear function It is important to note that a non-linear function may also be implemented (e.g., a logic or boolean function). The blur ratio is used to control the separation. The more blur that is present in the frame the smaller the portion of signal for the input image that is present in the high frequency portion of the separated image.

The high frequency portion of the separated image is amplified to enhance edges and sharpen the image using an amplification coefficient $\alpha$. The amplification coefficient $\alpha$ is adjusted or tuned using the blur ratio described earlier. The blur ratio is also used to control the amplification. The more blur that is present in the image, the less sharpening (i.e., less amplification or smaller coefficient $\alpha$) of the high frequency portion of the separated image occurs. The mapping function between $\alpha$ and the blur ratio may be a continuous strictly decreasing linear function. However, other implementations may use non-linear functions (e.g., a logic or Boolean function).

Finally, the processed high frequency portion of the separated image is recombined with the low frequency portion to form a processed image, given by the following equation:

$$I_{processed} = (I - I_h) + \alpha * I_h \qquad \text{(equation 16)}$$

It is important to note that it is not useful to amplify high frequency components of a blurred image that actually do not correspond to true sharp edges.

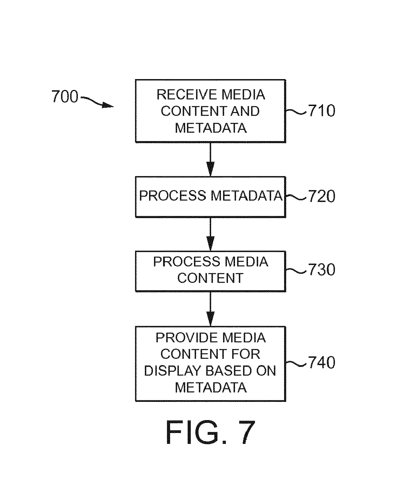

Turning to FIG. 7 a flowchart of a process 700 for receiving and processing metadata associated with media content in accordance with the present disclosure is shown. Process 700 may be implemented as part of user device 130 described in FIG. 1. Process 700 may also be implemented as part of user device 600 described in FIG. 6. Process 700 includes receiving the media content to be optimized for display along with metadata used for optimizing the media content, processing the metadata to determine the parameters (e.g., a blur metric, extremal values for blurring), processing the media content including modifying the media content based on the parameters, and providing the processed video content portion of the media content for display. Each of these steps will be discussed in further detail below.

At step 710, the media content along with the metadata is received over a network. The media content and metadata may be streamed as a data file to a user device (e.g., user device 600 described in FIG. 6) over a broadcast service provider network or may be delivered through a wired or wireless network from the Internet.

Next, at step 720, the received metadata is processed. The metadata is processed to extract instructions and parameters that may be used in conjunction with video processing performed on the media content in a user device. Parameters, such as a blur metric and/or extremal blur values, are extracted and may be used in conjunction with reformatting and video rescaling to adjust the video sharpening of video signal. The blur metric may also be used to indicate the presence of blurriness in the video signal to a user. As such, the metadata may also include adjustment to various settings for noise, chroma, and scaling to avoid artifacts and maximize the quality of the viewing experience on the user device.

Next, at step 730, the media content is processed. The media content may be processed based on inherent instructions included in the metadata for the media content. The processing may include decoding, decompression, rescaling, and conversion functions. In some embodiments, the inherent instructions may reverse some or all of the video processing functions that were applied to the original media content (e.g., in central processing block 120 described in FIG. 1).

In addition, the processing, at step 730, may be replaced or augmented based on instructions and parameters recovered from the received metadata at step 720. The instructions and parameters provided by the metadata for handling or otherwise presenting the video portion of media content may be used for optimizing the processing functions of some or all of the media content. The optimization of the processing based on the metadata may include accounting for the abilities or limitations of the hardware being used for the rendering or display of the media content. In one embodiment, blur indication information, such as a blur metric and/or extremal blur values, is used in conjunction with the optimization and processing of the media content in order to sharpen the video image for display. Further details regarding the use of blur indication information in a receiving device will described below.

At step 740, the processed media content that has been further optimized based on the received metadata is provided for display. The display may be a separate display device from the user device or may be integrated as part of the user device that received the media content and metadata from the network.

It is important to note that, in some embodiments, the media content and the metadata may not be provided together. For example, the media content file may be downloaded or provided as a data file stream over a network and stored. At a later time, a user device may be identified for display of the media content and a separate metadata file may be downloaded and used to augment and/or improve the processing of the media content to enhance the visual appearance of the media content on the identified user device. In other embodiments, the media content file may be provided on a storage medium, such as a DVD, Blu-Ray DVD, flash memory, or hard drive. The metadata file may be downloaded or provided as a data file stream over a network at a later time such as when the user desires to view the media content file. Other possible delivery mechanisms and formats are also possible as are known to those skilled in the art given the benefit of this disclosure.

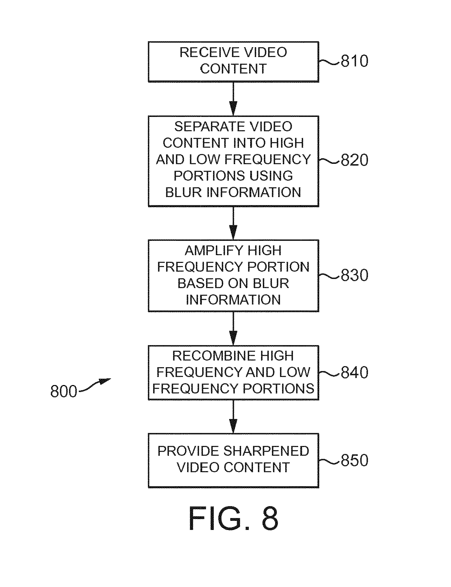

Turning to FIG. 8 a flowchart of a process 800 for sharpening the image in a video display signal using an indication of blurring in accordance with the present disclosure is shown. Process 800 will primarily be described in relation to user device 600 described in FIG. 6. Some or all of process 800 may be implemented as part of video decoder 605 and/or central processing unit 604 described in FIG. 6. Process 800 may also be implemented as part of user device 130 described in FIG. 1.

Process 800 many include extracting metadata, including the indication of blurring and providing the metadata, along with a video signal, for video decoding. The indication of blurring is used during the processing of the video portion of the media content in video decoder 605 in order to sharpen the video image. The image sharpening may be a preset operational condition, such as a condition established by a media content service provider, or may be based on the desired display performance or display capabilities. The video images in the video content are separated into a high frequency portion and a low frequency portion using the indication of blurring. Typically, the separation frequency may be adapted using the indication of blurring. The high frequency portion of the separated video image is amplified to enhance edges and sharpen the image using an amplification coefficient that is also based on the indication of blurring. The amplified high frequency portion of the separated image is recombined with the low frequency portion to form a processed video image and the processed video signal is provided for use in a display device.

At step 810, video content, including metadata associated with the video content, is received. The video content may be received at the receiving circuit in a user device (e.g., tuner 603) and delivered from a video streaming service or other Internet service provider. The video content may alternatively by provided from a fixed or portable data storage device including, but not limited to, an optical disk, a magnetic storage disk, or an electronic memory storage device. Also, at step 810, metadata, including the indication of blurring, is extracted. The extraction may be performed in a processing unit (e.g., central processing unit 604) and/or in a video decoder (e.g., video decoder 605). In one embodiment, the indication of blurring includes two extremal values of blur over the shot or a series of frames, as well as current blur metric value for some or all of the video images or frames in the video content. It is important to note that other indications of blurring may be used instead of, or in place of, the two extremal values and/or the current blur metric value. The indication of blurring is used during the processing of the video portion of the media content in order to sharpen the video image based on the desired display performance or display capabilities.

At step 820, the video content is separated into a high frequency portion and a low frequency portion based on the indication of blurring information. The indication of blurring is used to adaptively adjust or tune the separation frequency between the high frequency portion and low frequency portion. The separation, at step 820, may be performed in a video decoder (e.g., audio/video decoder 605) using many different types of filters including, but not limited to, an iterated median filter, edge preserving filters, bilateral filter, and a rolling guidance filter. In one embodiment, the two extremal values of blur over the shot or a series of frames, as well as current blur metric value, are used to determine a blur ratio, as described earlier. The blur ratio is used to adjust the characteristic of the separation filter.

At step 830, the high frequency portion of the video image is level-adjusted based on the indication of blur information. The high frequency portion of the separated image may be adjusted (e.g., amplified or attenuated) in a video decoder (e.g., audio/video decoder 605) to enhance edges and sharpen the image using an amplification coefficient $\alpha$. In one embodiment, the amplification coefficient $\alpha$ is adjusted or tuned using the blur ratio as described earlier.

At step 840, the amplified high frequency portion of the video image is recombined with the low frequency portion of the video image. The recombination, at step 840 may also be performed in a video decoder (e.g., audio/video decoder 605). At step 850, recombined video image, including the processed high frequency portion, is provided as a video signal for further processing. The further processing may include providing the video signal to a display device through a display interface (e.g., display interface 606).

It is important to note that some or all of the steps in process 700 may be combined with process 800 and implemented in a single device (e.g., user device 600 described in FIG. 6). For example, a blurry video signal may be provided over a network (e.g., through a media content streaming service) to a user device. The user device may determine an indication of blurring using aspects of steps 720 and 730 described in process 700. The indication of blurring may be used to sharpen the video content for display using aspects of steps 820, 830, 840, and 850 described in process 800. Some delay or latency will likely exist in order to determine the indication of blurring, particularly if extremal values for blurring are determined.

It is also important to note that one or more steps of process 300 described in FIG. 3 and one or more steps of process 700 described in 700 may be combined into one process and implemented in a single device (e.g., user device 130 described in FIG. 1). For example, the processing and determination of metadata, including an indication of blurring, at step 330, may be implemented in the user device as part of a modified process 700 after receiving the media content from a content provider, at step 710.

It is to be appreciated that one or more of the various features and elements shown and described above may be interchangeable. Unless otherwise indicated, a feature shown in one embodiment may be incorporated into another embodiment. Further, the features and elements described in the various embodiments may be combined or separated unless otherwise indicated as inseparable or not combinable.

One or more embodiments above describe an apparatus and method for sharpening video content using an indication of blurring. The embodiments include receiving a processing video signal to determine an indication of the blurring in the video signal. The blur indication may be determined in a number of ways. In one embodiment, the blur indication is determined using a gradient value on each side of each of the pixels in the first video image and the second video signal and determining a blur metric for a range of amounts of blurring based on the determined video blur characteristic, the blur metric further normalized to be monotonic in a range from zero to one for the range of amounts of blurring. Additionally, the apparatus and method may include determining extremal values (i.e., maximum and minimum levels) of blur for a series of video images in the video signal and providing these along with, or instead of, a blur metric. The series of images may make up what is referred to as a shot for the portion of the video signal. The extremal values may further allow adaptive sharpening of the video image over the video image frames in the shot. The blur indication is provided as metadata with the media content signal and may be streamed, or otherwise delivered, to users for processing and display.

The embodiments described above may also include receiving and processing media content that includes an indication of blurring in the video signal in order to adaptively sharpen the video image for display. One or more embodiments describe receiving and using an indication of blurring included as part of metadata for media content in order to process a video image or video signal that is part of the media content. The indication of blurring may include a blur metric for the video signal and/or extremal values for blurring present in the video signal. The indication of blurring is used in conjunction with a video sharpening circuit to improve the display of the video signal. The blur metric and/or the extremal values for blurring are used to adjust the processing of the high frequency portion of the video signal in order to sharpen the image for the video signal. The adaptive sharpening techniques described herein, including use of a blur metric and/or extremal values result in a reduction of sharpening artifacts typically present in the common static or sharpening processes. Further, the techniques described herein further improve the preservation of intentional blurring that may be present in high quality videos. The techniques for generating and providing an indication of blurring may also be used to provide an indication that some or all of the media content provided and displayed is blurry.

Although the embodiments which incorporate the teachings of the present disclosure have been shown and described in detail herein, those skilled in the art can readily devise many other varied embodiments that still incorporate these teachings. Having described preferred embodiments for an apparatus and method for sharpening a video using an indication of blurring in a video signal, it is noted that modifications and variations can be made by persons skilled in the art in light of the above teachings. It is therefore to be understood that changes may be made in the particular embodiments disclosed which are within the scope of the teachings as outlined by the appended claims.

**Claims**

1.  A method (300) comprising:

    providing (340) the indication of blurring along with the video signal to a signal receiving device, wherein the indication of blurring is provided to improve the sharpness of the video image.

2.  The method (300) of claim 1, wherein the indication of blurring includes a maximum and minimum value for blurring over a plurality of video frames in the video signal.

3.  The method (300) of claim 1, wherein the video signal is provided by a streaming video service provider.

4.  The method (300) of claim 1, further comprising determining (330) an indication of blurring for a video signal and wherein the indication of blurring includes a blur metric that is determined using a gradient value on each side of each of the pixels in the video image.

5.  The method (300) of claim 4, wherein the gradient value is determined in both the horizontal and vertical directions.

6.  The method (300) of claim 4, wherein the blur metric is normalized using a fourth order polynomial.

7.  The method (300) of claim 4, wherein the blur metric is further determined using luminance information associated with the video signal.

8.  The method (300) of claim 4, wherein blur metric is further determined using the sum of gradient values for at least two pixels in video signal, and determining the variance of the sum of gradient values for at least two pixels in the video signal.

9.  The method (300) of claim 8, wherein the blur metric is further determined by computing a ratio of the sum of gradient values and the variance of the sum of gradient values and subtracting the ratio from a value of one.

10. An apparatus (200) that performs the steps of any of the claims 1 to 9.

11. A method (700) comprising:

    receiving (710) a video signal, the video signal including metadata representing an indication of blurring in the video signal;
    adjusting (730) the sharpness of the video signal using the indication of the blurring recovered from the metadata; and
    providing (740) the adjusted video signal for display on a display device.

12. The method (700) of claim 11, wherein the indication of blurring includes a maximum and minimum value for blurring over a plurality of video frames in the video signal.

13. The method (700) of claim 11, wherein the adjusting further includes:

    separating a signal representing a frame in the plurality of video frames into a high frequency portion and a low frequency portion using the indication of blurring;

adjusting the signal level of the high frequency portion of the separated signal using the indication of blurring; and recombining the adjusted high frequency portion of the separated signal with the low frequency portion of the signal.

14. An apparatus (600) that performs the steps of any of the claims 11-13.

15. An apparatus that performs the steps of any of the claims 1-9 and 11-13.

100

110

CONTENT SOURCE

CONTENT →

120

CONTENT PROCESSING

CONTENT METADATA →

130

USER DEVICE

## FIG. 1

200

NETWORK INTERFACE ~250

220

METADATA GENERATOR

PROCESSOR(S) ~210

MEMORY

STORAGE

230

240

## FIG. 2

```
                        ┌─────────────┐
                        │   RECEIVE   │
                        │   CONTENT   │ ─310
                        └─────────────┘
                               │
                               ▼
                        ┌─────────────┐
                        │   PROCESS   │
                        │   CONTENT   │ ─320
                        └─────────────┘
                               │
                               ▼
                        ┌─────────────┐
                        │   PRODUCE   │
                        │  METADATA   │ ─330
                        └─────────────┘
                               │
                               ▼
                        ┌─────────────┐
                        │   PROVIDE   │
          300 ─►        │METADATA AND │
                        │ CONTENT TO  │ ─340
                        │   NETWORK   │
                        └─────────────┘
```

# FIG. 3

FIG. 4

FIG. 5

FIG. 6

700 → RECEIVE MEDIA CONTENT AND METADATA ~710

PROCESS METADATA ~720

PROCESS MEDIA CONTENT ~730

PROVIDE MEDIA CONTENT FOR DISPLAY BASED ON METADATA ~740

# FIG. 7

FIG. 8

Europäisches
Patentamt

European
Patent Office

Office européen
des brevets

## EUROPEAN SEARCH REPORT

Application Number

EP 15 30 6421

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/088460 A1 (OUCHI MAKOTO [JP] ET AL) 28 April 2005 (2005-04-28) | 1,3,10, 15 | INV. G06T5/00 |
| Y | * abstract * | 4,5,7-9 | H04N1/32 |
| A | * paragraphs [0069], [0072], [0076], [0122], [0139] - [0152] * | 2,6,12 | H04N1/58 |
| Y | US 2014/241573 A1 (GOEL PIYUSH [US] ET AL) 28 August 2014 (2014-08-28) * abstract * * paragraphs [0023], [0114] - [0121] * | 4,5,7-9 | |
| Y | US 2009/135264 A1 (JOHN GEORGE C [US]) 28 May 2009 (2009-05-28) * abstract * * paragraphs [0008], [0017] - [0019]; figures 3,4 * | 4,11,14 | |
| X | WO 2015/116971 A1 (HELLER NOAH RAYMOND [US]; BARTOT JAMES THEODORE [US]; CHRISTIANSON DAV) 6 August 2015 (2015-08-06) | 1 | |
| Y | * abstract * * paragraphs [0048], [0059]; figure 2 * | 4,11,14 | TECHNICAL FIELDS SEARCHED (IPC) G06T H04N |

~~The present search report has been drawn up for all claims~~

| Place of search | Date of completion of the search | Examiner |
|---|---|---|
| Munich | 21 March 2016 | Kessler, Cordula |

EPO FORM 1503 03.82 (P04C01)

Europäisches
Patentamt

European
Patent Office

Office européen
des brevets

**Application Number**

EP 15 30 6421

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-12, 14, 15

☐ The present supplementary European search report has been drawn up for those parts of the European patent application which relate to the invention first mentioned in the claims (Rule 164 (1) EPC).

| | **LACK OF UNITY OF INVENTION** | Application Number |
|---|---|---|
| Europäisches Patentamt<br>European Patent Office<br>Office européen des brevets | **SHEET B** | EP 15 30 6421 |

The Search Division considers that the present European patent application does not comply with the requirements of unity of invention and relates to several inventions or groups of inventions, namely:

    1. claims: 1-12, 14, 15

        Storing blur metadata with a video signal and using it for
        sharpening, where the blur metadata has a certain structure
        (claims 2, 12) or the metric is derived in a certain way
        (claims 4-9).
                            ---

    2. claim: 13

        Sharpening a video signal according to an included
        indication of blurring by means of amplifying the high
        frequencies of the video signal.
                            ---

## ANNEX TO THE EUROPEAN SEARCH REPORT
## ON EUROPEAN PATENT APPLICATION NO.

EP 15 30 6421

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2016

| Patent document cited in search report | | Publication date | Patent family member(s) | | Publication date |
|---|---|---|---|---|---|
| US 2005088460 | A1 | 28-04-2005 | JP | 4599920 B2 | 15-12-2010 |
| | | | JP | 2005102155 A | 14-04-2005 |
| | | | US | 2005088460 A1 | 28-04-2005 |
| US 2014241573 | A1 | 28-08-2014 | US | 2014240353 A1 | 28-08-2014 |
| | | | US | 2014241573 A1 | 28-08-2014 |
| | | | US | 2014245350 A1 | 28-08-2014 |
| | | | WO | 2014133559 A1 | 04-09-2014 |
| US 2009135264 | A1 | 28-05-2009 | CN | 101874417 A | 27-10-2010 |
| | | | EP | 2215862 A1 | 11-08-2010 |
| | | | KR | 20100084678 A | 27-07-2010 |
| | | | RU | 2010126156 A | 10-01-2012 |
| | | | US | 2009135264 A1 | 28-05-2009 |
| | | | WO | 2009073364 A1 | 11-06-2009 |
| WO 2015116971 | A1 | 06-08-2015 | US | 2015220806 A1 | 06-08-2015 |
| | | | WO | 2015116971 A1 | 06-08-2015 |

EPO FORM P0459

For more details about this annex : see Official Journal of the European Patent Office, No. 12/82